# EUROPEAN PATENT SPECIFICATION

(11) **EP 3 419 411 B1**
(45) Date of publication and mention of the grant of the patent: **27.10.2021**
(21) Application number: 17762172.9
(22) Date of filing: 25.08.2017
(51) Int. Cl.: A01G 24/00

(54) **MEDIA**
MEDIEN
SUPPORT

(30) Priority: 08.09.2016 GB 201615253
(43) Date of publication of application: 02.01.2019
(73) Proprietor: Toft, Michael John, Newcastle under Lyme ST5 9NR (GB); Toft, Craig John, Newcastle under Lyme ST5 9PT (GB); Heath, Victor Andrew, Newcastle under Lyme ST5 5FB (GB)
(72) Inventor: TOFT, Michael John, Packmoor, Stoke on Trent ST7 4SN (GB); TOFT, Craig John, Packmoor, Stoke on Trent ST7 4SN (GB)
(74) Representative: Swindell & Pearson Limited
(86) International application number: PCT/GB2017/052503
(87) International publication number: WO 2018/046888

(56) References cited:
- DE-A1- 4 016 824
- US-A- 5 328 498
- US-A1- 2009 056 221
- US-B2- 6 884 509

## Description

This invention concerns a media and a method of making a media, and particularly but not exclusively a media usable in hydroponics, aquaponics, or water filtration.

A number of media have been proposed for use in hydroponics and/or aquaponics. A commonly used such media is baked clay pellets. In general in most instances it is not possible, or at least not advisable, to clean and reuse such media. Media like US 5 328 498 A can be used in a wide range of situations and processes, and can be used for instance in water filtration.

According to the invention there is provided a method of making a media, the method comprising mixing together three components, granulating the mixture and firing the granules formed, the first component is silica sand, the second component is mica granite sand, and the third component is a glass powder, with the firing taking place at a temperature such that the third component melts during firing.

The three components may be provided in substantially equal portions by weight to each other.

The first component may include at least 70% silica.

The first component may include at least 1-5% alumina.

The first component may include at least 13% soda.

Additional trace elements may be added to the first component.

The first component may have a substantially uniform particle size, and may have a significantly more uniform particle size than the second component.

The first component may have a particle size of between 0.15 and 0.3mm. The first component may be formed from waste glass.

The second component may have a relatively wide particle size distribution. The second component may have a particle size of substantially between 0.075mm and 5mm.

At least 95% of the second component may have a particle size of substantially between 0.075mm and 5mm.

At least 25% of the second component may have a particle size of greater than 1.0mm.

At least 25% of the second component may have a particle size of less than 0.15mm.

The third component may be soda lime glass.

The third component may have a particle size of less than 0.07mm.

The third component may be formed of recycled glass, and may be formed of recycled windscreen glass.

The third component may have a melting point of less than 750°C, and may have a melting point of less than 740°C, and may have a melting point of around 710°C.

The components of the material may be mixed together in a blade mixer.

The mixture may be granulated in a granulator so as to produce balls of a required size.

Alternatively a granulating or pelletising mixer may be used to mix the components and provide balls of a required size.

The balls may have a diameter of between 10 and 15mm.

The mixture may be fired to a maximum temperature of greater than 700°C, and may be fired to a maximum temperature of substantially 740°C.

The granulated mixture may be fired in a multi zone belt kiln.

According to a further embodiment there is provided a media material made by a method according to any of the preceding twenty three paragraphs.

An embodiment of the present invention will now be described by way of example only:
The following components were added together and mixed in a blade type mixer till visibly evenly mixed, which may take for instance around 10 minutes.

The mixture comprises a first component of glass sand with a typical particle size of between 0.15 and 0.3mm. This sand is formed from waste green container glass. The mixture also included a second component in the form of a mica granite sand containing sub angular grains of quartz, white feldspar and white mica. The mica granite sand has a relatively wide particle distribution, with particle sizes between 0.075mm and 5mm. The mixture also included a combustible organic product in the form of fine grade sawdust. A typical mix of this material would comprise:
30kg silica sand powder
30kg mica granite sand
30kg glass powder

The mixed power is fed into a pan granulation machine and combined with a fine spray of water to form balls. When the balls reach a required size, which may differ between different applications, the balls fall from the pan into a container or onto a belt. The balls are fired in a four zone electric conveyor kiln at temperatures of 150°C, 400°C, 700°C and 740°C, with a total travel time through the kiln of around 35 minutes. At least at the maximum firing temperature the glass powder melts to bond together the other components.

The finished product is a highly porous ball, typically with a porosity of around 40%. This contains roughly spherical particles of quartz and sand containing trace elements which have been shown to be beneficial to plant and aquatic life, whilst allowing maximum uptake of air and water through the media to the plants.

The finished product has the following major components:

| Component | Weight % |
|---|---|
| Silica (SiO₂ | 85.59 |
| Titania (TiO₂) | 0.03 |
| Alumina (Al₂O₃) | 3.28 |
| Ferric oxide (Fe₂O₃) | 0.20 |
| Lime (CaO) | 3.09 |
| Magnesia (MgO) | 1.36 |
| Potash (K₂O) | 1.14 |

| | |
|---|---|
| Soda (Na₂O) | 4.64 |
| Phosphorous Pentoxide (P₂O₅) | 0.04 |
| Chromium Sesquioxide (Cr₂O₃) | <0.01 |
| Manganic Oxide (Mn₃O₄) | <0.01 |
| Zirconia (ZrO₂) | 0.02 |
| Hafnia (HfO₂) | <0.01 |
| Lead Monoxide (PbO) | 0.05 |
| Zinc Oxide (ZnO) | <0.01 |
| Barium Oxide (BaO) | 0.01 |
| Strontia (SrO) | <0.01 |
| Stannic Oxide (SnO₂) | <0.01 |
| Cupric Oxide (CuO) | <0.01 |

Provided below is an indication of the wide particle size distribution of the mica granite sand, indicating the percentage retained by each sieve size.

| Sieve Size mm | % Retained |
|---|---|
| 5.0 | 2% |
| 2.36 | 2% |
| 1.18 | 25% |
| 0.6 | 15% |
| 0.3 | 17% |
| 0.15 | 30% |
| 0.075 | 9% |
| <0.075 | 2% |

It is to be realised that a wide range of modifications may be made without departing from the scope of the appended claims.

## Claims

1. A method of making a media, the method comprising mixing together three components, granulating the mixture and firing the granules formed, **characterised in that** the first component is silica sand, the second component is mica granite sand, and the third component is a glass powder, with the firing taking place at a temperature such that the third component melts during firing.

2. A method according to claim 1, in which the three components are provided in substantially equal portions by weight to each other.

3. A method according to claims 1 or 2, in which the first component includes at least 70% silica; may include at least 1-5% alumina; and may include at least 13% soda.

4. A method according to any of the preceding claims, in which the first component has a substantially uniform particle size, and the first component may have a significantly more uniform particle size than the second component.

5. A method according to any of the preceding claims, in which the first component has a particle size of between 0.15 and 0.3mm.

6. A method according to any of the preceding claims, in which the first component is formed from waste glass.

7. A method according to any of the preceding claims, in which the second component has a relatively wide particle size distribution; may have a particle size of substantially between 0.075mm and 5mm; and at least 95% of the second component may have a particle size of substantially between 0.075mm and 5mm.

8. A method according to any of the preceding claims, in which at least 25% of the second component has a particle size of greater than 1.0mm, and at least 25% of the second component may have a particle size of less than 0.15mm.

9. A method according to any of the preceding claims, in which the third component is soda lime glass.

10. A method according to any of the preceding claims, in which the third component has a particle size of less than 0.07mm; may be formed of recycled glass; and may be formed of a recycled windscreen glass.

11. A method according to any of the preceding claims, in which the third component has a melting point of less than 750°C; particularly less than 740°C; and may have a melting point of around 710°C.

12. A method according to any of the preceding claims, in which the components of the material are mixed together in a blade mixer; the mixture may be granulated in a granulator so as to produce balls of a required size; the balls may have a diameter of between 10 and 15mm; and may be fired in a multi zone belt kiln.

13. A method according to any of claims 1-11, in which a granulating or pelletising mixer is used to mix the components and provide balls of a required size, and the balls may have a diameter of between 10 and 15mm.

14. A method according to any of the preceding claims, in which the mixture is fired to a maximum temperature of greater than 700°C; and may be fired to a maximum temperature of substantially 740°C.

15. A media material made by a method according to any of the preceding claims.

## Patentansprüche

1. Verfahren zur Herstellung eines Mediums, wobei das Verfahren Mischen von drei Komponenten, Granulieren der Mischung und Brennen des gebildeten Granulats umfasst, **dadurch gekennzeichnet ist, dass** die erste Komponente Quarzsand, die zweite Komponente Glimmergranitsand und die dritte Komponente ein Glaspulver ist, wobei das Brennen bei einer solchen Temperatur stattfindet, dass die dritte Komponente während des Brennens schmilzt.

2. Verfahren nach Anspruch 1, wobei die drei Komponenten in im Wesentlichen gleichen Gewichtsanteilen zueinander bereitgestellt werden.

3. Verfahren nach den Ansprüchen 1 oder 2, wobei die erste Komponente mindestens 70% Siliciumdioxid enthält, mindestens 1-5% Aluminiumoxid enthalten kann und mindestens 13% Soda enthalten kann.

4. Verfahren nach einem der vorhergehenden Ansprüche, wobei die erste Komponente eine im wesentlichen gleichmäßige Teilchengröße aufweist und die erste Komponente eine wesentlich gleichmäßigere Teilchengröße als die zweite Komponente aufweisen kann.

5. Verfahren nach einem der vorhergehenden Ansprüche, wobei die erste Komponente eine Teilchengröße zwischen 0,15 und 0,3 mm aufweist.

6. Verfahren nach einem der vorhergehenden Ansprüche, wobei die erste Komponente aus Altglas gebildet ist.

7. Verfahren nach einem der vorhergehenden Ansprüche, wobei die zweite Komponente eine relativ breite Teilchengrößenverteilung aufweist, eine Teilchengröße von im Wesentlichen zwischen 0,075 mm und 5 mm haben kann, und mindestens 95% der zweiten Komponente eine Teilchengröße von im Wesentlichen zwischen 0,075 mm und 5 mm aufweisen können.

8. Verfahren nach einem der vorhergehenden Ansprüche, wobei mindestens 25% der zweiten Komponente eine Partikelgröße von mehr als 1,0 mm und mindestens 25% der zweiten Komponente eine Partikelgröße von weniger als 0,15 mm aufweisen können.

9. Verfahren nach einem der vorhergehenden Ansprüche, wobei die dritte Komponente Kalk-Natron-Glas ist.

10. Verfahren nach einem der vorhergehenden Ansprüche, wobei die dritte Komponente eine Teilchengröße von weniger als 0,07 mm aufweist, aus recyceltem Glas gebildet sein kann und aus einem recycelten Windschutzscheibenglas gebildet sein kann.

11. Verfahren nach einem der vorhergehenden Ansprüche, wobei die dritte Komponente einen Schmelzpunkt von weniger als 750°C, insbesondere von weniger als 740°C, aufweist und einen Schmelzpunkt von etwa 710°C haben kann.

12. Verfahren nach einem der vorhergehenden Ansprüche, wobei die Komponenten des Materials in einem Schaufelmischer zusammengemischt werden, wobei die Mischung in einem Granulator granuliert werden kann, um Kugeln einer erforderlichen Größe herzustellen, wobei die Kugeln einen Durchmesser zwischen 10 und 15 mm haben können, und in einem Mehrzonen-Bandofen gebrannt werden können.

13. Verfahren nach einem der Ansprüche 1 - 11, wobei ein Granulier- oder Pelletiermischer verwendet wird, um die Komponenten zu mischen und Kugeln einer erforderlichen Größe bereitzustellen, und die Kugeln einen Durchmesser zwischen 10 und 15 mm haben können.

14. Verfahren nach einem der vorhergehenden Ansprüche, wobei das Gemisch bis zu einer maximalen Temperatur von mehr als 700°C gebrannt wird, und bis zu einer Maximaltemperatur von im Wesentlichen 740°C gebrannt werden kann.

15. Medienmaterial, hergestellt nach einem Verfahren gemäß einem der vorhergehenden Ansprüche.

## Revendications

1. Procédé de fabrication d'un support, le procédé comprenant les étapes consistant à mélanger trois composants, granuler le mélange et chauffer les granulés formés,
**caractérisé en ce que** le premier composant est du sable de silice, le deuxième composant est du sable de granite à mica, et le troisième composant est une poudre de verre, avec le chauffage qui se produit à une température telle que le troisième composant fond pendant le chauffage.

2. Procédé selon la revendication 1, dans lequel les trois composants sont fournis dans des part sensiblement égales en poids les unes par rapport aux autres.

3. Procédé selon les revendications 1 ou 2, dans lequel le premier composant comprend au moins 70% de silice ; peut comprendre au moins 1 à 5% d'alumine ; et peut comprendre au moins 13% de soude.

4. Procédé selon l'une quelconque des revendications précédentes, dans lequel le premier composant a une taille de particules sensiblement uniforme, et le premier composant peut avoir une taille de particule sensiblement plus uniforme que le second composant.

5. Procédé selon l'une quelconque des revendications précédentes, dans lequel le premier composant a une taille de particules comprise entre 0,15 et 0,3 mm.

6. Procédé selon l'une quelconque des revendications précédentes, dans lequel le premier composant est formé à partir de déchets de verre.

7. Procédé selon l'une quelconque des revendications précédentes, dans lequel le second composant a une distribution de taille de particules relativement large ; peut avoir une taille de particules substantiellement comprise entre 0,075 mm et 5 mm ; et au moins 95% du deuxième composant peut avoir une taille de particules sensiblement comprise entre 0,075 mm et 5 mm.

8. Procédé selon l'une quelconque des revendications précédentes, dans lequel au moins 25% du second composant a une taille de particules supérieure à 1,0 mm et au moins 25% du second composant peut avoir une taille de particules inférieure à 0,15 mm.

9. Procédé selon l'une quelconque des revendications précédentes, dans lequel le troisième composant est du verre sodocalcique.

10. Procédé selon l'une quelconque des revendications précédentes, dans lequel le troisième composant a une taille de particules inférieure à 0,07 mm ; peut être formé de verre recyclé ; et peut être formé d'un verre de pare-brise recyclé.

11. Procédé selon l'une quelconque des revendications précédentes, dans lequel le troisième composant a un point de fusion inférieur à 750 °C ; particulièrement moins de 740 °C ; et peut avoir un point de fusion d'environ 710 °C.

12. Procédé selon l'une quelconque des revendications précédentes, dans lequel les composants du matériau sont mélangés ensemble dans un mélangeur à pales ; le mélange peut être granulé dans un granulateur de manière à produire des billes d'une taille requise ; les billes peuvent avoir un diamètre compris entre 10 et 15 mm ; et peuvent être chauffées dans un four à tapis multi-zone.

13. Procédé selon l'une quelconque des revendications 1 à 11, dans lequel un mélangeur de granulation ou de pelletisation est utilisé pour mélanger les composants et fournir des billes d'une taille requise, et les billes peuvent avoir un diamètre compris entre 10 et 15 mm.

14. Procédé selon l'une quelconque des revendications précédentes, dans lequel le mélange est chauffé à une température maximale supérieure à 700 °C ; et peut être chauffé à une température maximale de sensiblement 740 °C.

15. Matériau de support fabriqué par un procédé selon l'une quelconque des revendications précédentes.
